# EUROPEAN PATENT SPECIFICATION

(11) **EP 3 718 020 B1**
(45) Date of publication and mention of the grant of the patent: **26.03.2025**
(21) Application number: 17822247.7
(22) Date of filing: 15.12.2017
(51) Int. Cl.: G06F 15/78, G06F 12/00

(54) **TRANSPARENT LRDIMM MODE AND RANK DISAGGREGATION FOR USE WITH IN-MEMORY PROCESSING**
TRANSPARENTER LRDIMM-MODUS UND RANK-AUFLÖSUNG ZUR VERWENDUNG BEI DER VERARBEITUNG IM SPEICHER
MODE TRANSPARENT DE LRDIMM ET DÉSAGRÉGATION DE RANG POUR UTILISATION AVEC UN TRAITEMENT EN MÉMOIRE

(43) Date of publication of application: 07.10.2020
(73) Proprietor: HUAWEI TECHNOLOGIES CO., LTD., Shenzhen, Guangdong 518129 (CN)
(72) Inventor: GRIES, Matthias, 80992 Munich (DE)
(74) Representative: Roth, Sebastian
(86) International application number: PCT/EP2017/082967
(87) International publication number: WO 2019/114979

(56) References cited:
- US-A1- 2017 344 301
- HALL M ET AL: "Mapping Irregular Applications to DIVA, a PIM-based Data-Intensive Architecture", SUPERCOMPUTING, ACM/IEEE 1999 CONFERENCE 13-18 NOV. 1999, PISCATAWAY, NJ, USA,IEEE, 2 PENN PLAZA, SUITE 701 NEW YORK NY 10121-0701 USA, 13 November 1999 (1999-11-13), pages 57 - 57, XP010892835, ISBN: 978-1-58113-091-1, DOI: 10.1145/331532.331589
- HADI ASGHARI-MOGHADDAM ET AL: "Chameleon", MICROARCHITECTURE, IEEE PRESS, 445 HOES LANE, PO BOX 1331, PISCATAWAY, NJ08855-1331USA, 15 October 2016 (2016-10-15), pages 1 - 13, XP058384806
- JEFF DRAPER ET AL: "The architecture of the DIVA processing-in-memory chip", CONFERENCE PROCEEDINGS OF THE 2002 INTERNATIONAL CONFERENCE ON SUPERCOMPUTING. ICS'02. NEW YORK, NY, JUNE 22 - 26, 2002; [ACM INTERNATIONAL CONFERENCE ON SUPERCOMPUTING], NEW YORK, NY : ACM, US, 22 June 2002 (2002-06-22), pages 14 - 25, XP058196490, ISBN: 978-1-58113-483-4, DOI: 10.1145/514191.514197
- YI KANG ET AL: "FlexRAM: toward an advanced intelligent memory system", COMPUTER DESIGN, 1999. (ICCD '99). INTERNATIONAL CONFERENCE ON AUSTIN, TX, USA 10-13 OCT. 1999, LOS ALAMITOS, CA, USA,IEEE COMPUT. SOC, US, 10 October 1999 (1999-10-10), pages 192 - 201, XP010360511, ISBN: 978-0-7695-0406-3

## Description

### TECHNICAL FIELD

The invention relates to a device and a method for In-Memory Processing (IMP). In particular, the purpose of the device and method is to increase the available memory capacity for IMP by using commodity memory devices and protocols.

### BACKGROUND

In a compute node or system, such as a server, desktop computer or laptop, computations are either done on the main central processing unit (CPU) or on accelerator cards, e.g. graphic accelerator cards carrying graphics processing units (GPU). Data transfers from main memory always have to go long-distance through a particular computing system to reach the CPU or the GPU and allow these units to perform computations with the data. Hence, performance and energy efficiency are adversely affected by this memory "bottleneck" of contemporary computing architectures. A view on how main memory is laid out in these computing architectures sheds light on the nature of said memory bottleneck. Main memory of computing devices is usually organized in memory modules (e.g. dual in-line memory modules, called DIMMs) that work on shared memory channels, also known as busses. These shared memory channels limit the achievable performance of the system, since particularly the sustainable memory bandwidth is limited.

In-Memory Processing (IMP), which is also known as Near-Data Processing or In-Memory Computing, has been proposed as a new form of processing architecture, where computations are located closer to main memory of a system. Since data may stay local, data movement between levels of the memory hierarchy is reduced and better performance and energy efficiency is achieved.

Recent approaches for implementing this architecture propose custom memory devices, such as JEDEC High-Bandwidth Memory (HBM) and Micron's Hybrid Memory Cube (HMC), and specialized logic dies, which offer high bandwidth for IMP computing, when tightly integrated.

This form of integration with HBM or HMC is expensive, since it requires either 3-dimensional process technology, such as through-silicon via [TSV]-enabled 3D stacking of logic and DRAM dies, or "2.5"-dimensional techniques, such as using an additional Silicon-interposer on top of the package substrate. As a consequence, recent compute architectures for hardware implementations of IMP are not suitable for replacing commodity RAM devices, such as DDR4 and Non-Volatile Memory (NVM), typically used as main memory in commodity compute nodes, such as servers, and memory capacity of these solutions is thus limited.

Due to the limited memory capacity of these IMP solutions, additional commodity memory (e.g., JEDEC DDR4) needs to be deployed in typical compute systems (e.g., servers) such that the main CPU can work from main memory. IMP cannot make use of this main memory, since IMP is tightly integrated with specialized memory. Since IMP solutions can only be used for part of the main memory, the size of the active working set of workloads is limited and main memory is fragmented. As a further limitation, memory used by IMP may not be visible to a system on a chip (SoC), host or CPU, if IMP is disabled, while commodity RAM is still be used for normal operation and booting the system. As a result of this specialization, IMP is only applied for selected applications resulting in a limited scope of application.

JEFF DRAPER ET AL: "The architecture of the DIVA processing-in-memory chip", ICS'02, NEW YORK, NY, JUNE 22 - 26, 2002; pages 14-25 discloses a collection of Processing-In-Memory (PIM) chips as smart-memory co-processors to a conventional microprocessor. Features of the DIVA PIMs include a memory interface to a host processor, 256-bit wide data paths for exploiting on-chip bandwidth and an address translation unit.

US 2017/344301 A1 discloses an operation method of a semiconductor memory device including a memory cell array and an internal processor. Internal processing operations include receiving at the memory device a first mode indicator that indicates whether the memory device should operate in a processor mode or in a normal mode, receiving at the memory device processing information for the memory device, when the first mode indicator indicates that the memory device should operate in the processor mode, storing the processing information in a first memory cell region of the memory cell array, using the stored processing information to perform internal processing by the internal processor, and storing a result of the internal processing in the memory cell array.

HALL M ET AL: "Mapping Irregular Applications to DIVA, a PIM-based Data-Intensive Architecture", Proceedings of the ACM/IEEE SC99 Conference, November 13-18, 1999, Piscataway, NJ, USA discloses aspects of a Data-Intensive Architecture (DIVA) to support PIM.

HADI ASGHARI-MOGHADDAM ET AL: "Chameleon: Versatile and Practical Near-DRAM Acceleration Architecture for Large Memory Systems", MICROARCHITECTURE, IEEE PRESS, Piscataway, NJ, USA discloses the integration of near-DRAM accelerators (NDA) with a load-reduced DIMM (LRDIMM).

### SUMMARY

In view of the above-mentioned challenges and disadvantages, the invention aims to improve the conventional solutions.

The object of the invention is achieved by the solution defined in the enclosed independent claims. Advantageous implementations of the invention are further defined in the dependent claims.

A first aspect of the invention provides a media controller, MDC, for enabling in-memory computing with a main memory, where the memory is for use in a computing device, comprising an in-memory processing, IMP, unit or IMP processor configured to access the main memory based on a first linear main memory address and to perform computations on data from the main memory, a slave physical layer unit or simply slave physical layer configured to serve a request from a host to access the main memory, wherein the request comprises a type of access and an address information, a reverse memory controller, RMC, configured to reassemble a second linear main memory address from a plurality of protocol fields contained in the address information, and to provide the second linear main memory address and the type of access to a local memory controller, LMC, and the LMC configured to grant the IMP access to the main memory and to reschedule the request from the host to access the main memory, as long as computations and access to the main memory performed by the IMP are active and if the first and second linear memory addresses are both included in a predetermined address range.

The MDC of the first aspect allows increasing the available memory capacity for IMP at a lower cost than, for instance, with HBM and HMC integration. In particular, the usable bandwidth is increased compared to standard memory subsystems. Also, the MDC of the first aspect simplifies the deployment of IMP. In particular, by reassembling the second linear main memory address, the LMC is able to compare the access of the host to the access of the IMP, which is based on the first linear memory address, and thus enables the rescheduling of the host request. Notably, the host is not aware of this reassembling, and cannot observe difference than when conventionally accessing a main memory.

In an implementation form of the first aspect, the request further comprises data and the RMC is further configured to provide the data to the LMC, if the type of access is a write access.

Accordingly, the RMC is configured to distinguish different types of access requested by the host.

In a further implementation form of the first aspect, the MDC comprises a buffer unit (or buffer) configured to decouple an electrical load on a memory channel to the host from another electrical load of the main memory.

In a further implementation form of the first aspect, the MDC comprises a switch configured to disable or enable the IMP, wherein the MDC is configured to route all requests from the host to access the main memory without scheduling via the buffer, if the IMP is disabled, and schedule all requests from the host to access the main memory by the LMC and route the requests via the buffer unit, if the IMP is enabled.

If the IMP is disabled, the LMC does thus not interfere with the access scheduled by the host. If the IMP is enabled, IMP can be carried out efficiently, since the host requests are scheduled accordingly by the LMC.

In a further implementation form of the first aspect, the switch is configured to be triggered at run-time or boot time of the computing device.

A second aspect of the invention provides a memory module, which comprises the MDC according to the first aspect and at least a part of the main memory.

Accordingly, the memory module of the second aspect achieves the same advantages as the MDC of the first aspect.

In an implementation form of the second aspect, the at least a part of the memory comprises a plurality of memory units or memories disposed on a dual in-line memory module, DIMM, and organized in ranks, whereby each rank is defined by a unique chip-select signal and only one rank at a time has access to the memory channel to the host.

In a further implementation form of the second aspect, each memory unit is addressed by and directly wired with the MDC to replace its respective rank address with a rank-independent address of a local channel, whereby the local channel comprises all memory units associated with at least one rank, and all local channels are simultaneously accessible by the MDC.

In a further implementation form of the second aspect, the MDC further comprises an address mapper to map the request from the host of the computing device to access the main memory, which is targeted at the rank address of each memory unit, to the corresponding rank-independent local channel address.

In a further implementation form of the second aspect, the address mapper is configured to forward a rank address to the corresponding local channel, if the local channel comprises all memory units associated with exactly one rank.

In a further implementation form of the second aspect, the local memory controller of the MDC is further configured to access only a range of memory units or only selected ranks.

In a further implementation form of the second aspect, a control over any of the local channels, which is covered by the range of memory units, is turned over to the host.

A third aspect of the invention provides a method for enabling in-memory computing with a main memory, where the memory is for use in a computing device, in a computing device, comprising the steps of accessing, by an in-memory processing, IMP, the main memory based on a first linear main memory address and performing computations on data from the main memory, serving, by a slave physical layer, a request from a host to access the main memory, wherein the request comprises a type of access and an address information, reassembling, by a reverse memory controller, RMC, a second linear main memory address from a plurality of protocol fields contained in the address information, and providing the second linear main memory address and the type of access to a local memory controller, LMC, and granting, by the local memory controller, the IMP access to the main memory and rescheduling the request from the host to access the main memory, as long as computations and access to the main memory performed by the IMP are active and if the first and second linear memory addresses are both included in a predetermined address range.

In an implementation form of the third aspect, the request further comprises data and the RMC further provides the data to the LMC, if the type of access is a write access.

In a further implementation form of the third aspect, the MDC comprises a buffer unit (or buffer) for decoupling an electrical load on a memory channel to the host from another electrical load of the main memory.

In a further implementation form of the third aspect, the MDC comprises a switch for disabling or enabling the IMP, wherein the MDC routes all requests from the host to access the main memory without scheduling via the buffer, if the IMP is disabled, and schedules all requests from the host to access the main memory by the LMC and routes the requests via the buffer, if the IMP is enabled.

In a further implementation form of the third aspect, the switch is triggered at run-time or boot time of the computing device.

The method of the third aspect achieves the same advantages as the MDC of the first aspect.

A fourth aspect of the invention provides a computer program product comprising a program code for enabling in-memory computing with a main memory in a computing device according to the first or the second aspect of the invention.

Accordingly, the above-described advantages can be achieved.

In summary, in the embodiments of the invention, in-memory computing with a main memory in a computing device can be implemented. The invention proposes a media controller, MDC, for enabling In-Memory Processing, IMP, with a main memory in a computing device. The MDC may use standard, commodity memory devices and protocols and can coordinate accesses from a host and accesses from IMP compute units to said memory devices. Thereby, available memory capacity for IMP is increased. The traditional organization of main memory in memory modules may be maintained, such that the deployment of IMP is simplified. Usable bandwidth is increased compared to a standard memory subsystem with standard, commodity memory devices by enabling the MDC to buffer, control and process data movement between memory modules and their associated memory channel(s)/bus(ses).

All devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the invention will be explained in the following description of specific embodiments in relation to the enclosed drawings, in which
FIG. 1 shows an overview of a new memory control mechanism for IMP computing.
FIG. 2 shows an example of bandwidth increase for IMP computing.
FIG. 3 shows an example of a media controller according to an embodiment of the invention.
FIG. 4 shows an example of three flow paths of memory accesses according to an embodiment of the invention.
FIG. 5 shows an example of reorganizing memory ranks on a DIMM according to an embodiment of the invention.
FIG. 6 shows an example of a hybrid configuration for IMP computing according to an embodiment of the invention.
FIG. 7 shows an example of control flows of a media controller according to an embodiment of the invention.
FIG. 8 shows an example of a method according to an embodiment of the invention.

### DETAILED DESCRIPTION OF EMBODIMENTS

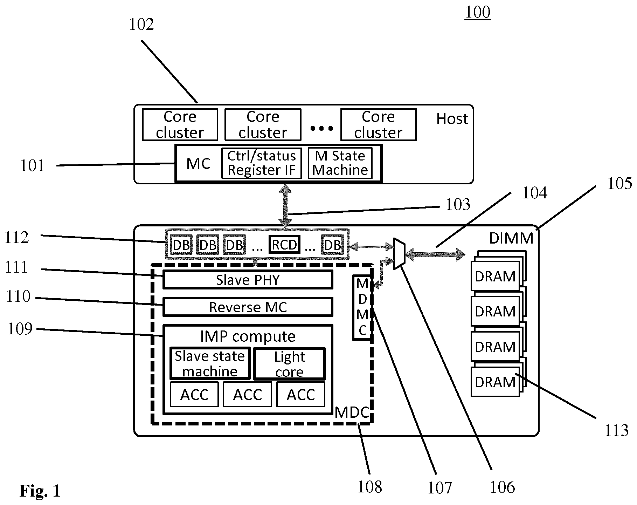

FIG. 1 shows an overview of a control mechanism 100 with a media controller (MDC) 108 according to an embodiment of the invention. The MDC 108 enables in-memory computing on a main memory module 105 comprising memory devises 113 (here exemplarily DRAMs) in a computing device. Advantageously, the MDC 108 is provided on the main memory module 105 and connected to the memory devices 113.

The MDC 108 comprises an IMP unit or In-Memory Processor 109, a slave physical layer unit or slave physical layer 111, a reverse memory controller (RMC) unit or a reverse memory controller (RMC) 110, and a local memory controller or local memory controller (LMC) unit 107.

The IMP unit 109 is configured to access the main memory 105, i.e. particularly the memory devices 113, based on a first linear main memory address, and to perform computations on data from the main memory 105, 113. Accordingly, IMP is enabled by the MDC 108.

The slave physical layer unit 111 is configured to serve a request from a host 102 to access the main memory 105, i.e. particularly the main memory devices 113, wherein the request comprises a type of access and an address information.

The RMC 110 is configured to reassemble a second linear main memory address from a plurality of protocol fields contained in the address information in the host request, and to provide the second linear main memory address and the type of access to the LMC unit 107.

The LMC unit 107 is configured to grant the IMP unit 109 access to the main memory 105, specifically the memory devices 113, and to reschedule the request from the host 102 to access the main memory 105, 113, as long as computations and access to the main memory 105, 113 performed by the IMP unit 109 are active, and if the first and second linear memory addresses are both included in a predetermined address range. Thus, conflicts between memory accesses of the host and the IMP unit can be avoided.

Various memory modules 105 (e.g., LRDIMMs using DDR4 memory devices) may be used and may be enhanced with the MDC 108. The MDC 108 preferably operates as a central buffer chip between the memory modules 105 and a CPU/host memory bus 103. The CPU/host 102 may employ several memory busses, each populated with several memory modules 105. The MDC 108 advantageously comprises the IMP compute capabilities performed by the IMP compute unit 109. The MDC 108 may either use or integrate the Data Buffer, DB, / Registering Clock Driver, RCD, 112 (such as LRDIMM clock drivers and data buffers for signal integrity) functionality from traditional JEDEC LRDIMMs. The DB/RCD chips used today are preferably simple repeater devices, such that the electrical load on the memory channel 103 to the host 102 is decoupled from the load of the numerous DRAM devices 113 organized in memory ranks on the memory module 105 or dual-inline memory module (DIMM) 105, to which will be referred to in the following. Such an IMP-enhanced load-reduced DIMM will be referred to as IMP-LRDIMM in the following.

The working principle of an IMP-LRDIMM, however, is also amenable to other memory architectures or technologies such as GDDR5 graphics RAM and byte-addressable non-volatile memory such as 3D XPoint technology.

The control mechanism performed by the MDC 108 makes sure that the memory on the DIMM or a plurality of DIMMs 105 is always visible to the host/CPU 102 as main memory, even though the IMP unit 109 may be enabled on the DIMM 105 locally at the same time ("Transparent LRDIMM" mode of operation). If the IMP unit 109 is enabled, accesses to the memory 105, 113 from the IMP unit 109 are preferred over accesses to the memory from the host 102 by the following mechanism. If the IMP unit 109 is not used, the IMP-LRDIMM behaves like a normal LRDIMM. That means, all memory accesses from the host may be scheduled by the host-sided memory controller (MC) 101 of the host 102. If the IMP unit 109 is switched on, all accesses to memory devices 113 on the DIMM 105, either issued by the host 102 or issued by the IMP unit 109 of the MDC 108, are scheduled by the LMC unit 107, e.g. a memory controller (MDMC) integrated in the MDC 108. The MDC 108 includes further the slave physical unit (slave PHY) 111 to work as an end point for the memory protocol with the host 102. The RMC 110, e.g. implemented as a reverse MC 110, reassembles, e.g., complete addresses from RAS and CAS phases of a JEDEC protocol, which may be used by the host 102, in order to take account of the physical memory architecture of DRAM devices 113 when addressing memory. Requests by the host 102 can be rescheduled by the LMC unit 107 of the MDC 108. For the host 102, the main memory 105 is still accessible, even if the IMP unit 109 is enabled for a same address range.

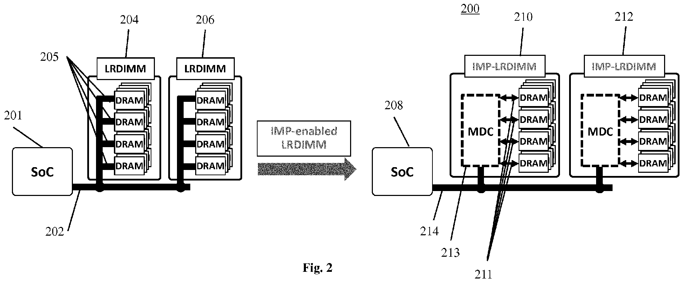

FIG. 2 shows a further mode of operation ("rank disaggregation") with an MDC 213 as an optional control mechanism 200. A bandwidth increase for IMP may be attainable due to a novel organization of memory channels on IMP-LRDIMMs 210, 212 derived from original memory ranks 205, and localized IMP on IMP-LRDIMMs. Traditional DIMMs 204 or 206 are organized in memory ranks 205 to increase the total capacity of the DIMMs. Just as an example, four ranks 205 are shown on the LRDIMM 204 on the left side of Fig. 2. Only one rank at a time, which is defined as a set of memory devices, which are connected to a same chip-select signal, and one DIMM 204 or 206 at a time can use the memory bus 202 to the host or SoC 201. Therefore, bandwidth to main memory is limited by the shared bus 202 to the host/SoC 201.

With an IMP compute-enabled DIMM 210 or 212 as shown on the right side of Fig. 2, memory ranks can be connected as independent channels 211 to the MDC 213 such that the usable bandwidth for IMP on the DIMM 210, 212 is increased. In this case additional PCB-level wiring overhead on the DIMM may be used. This kind of optimization for IMP computing makes sense, since the IMP compute capability on a DIMM, due to its direct access to main memory, does not depend on the limited bandwidth on the memory bus 214 to the host or SoC 208 for most of the IMP operations.

Overall, the usable bandwidth for IMP is increased since a) both DIMMs 210 and 212 on the bus 214 to the host can work independently (not having to share bandwidth on the bus to the host) and b) additionally several channels 211 can be used independently on DIMM instead of time-slot-dependent ranks 205.

In a standard configuration (without IMP capability) as shown on the left side of Fig. 2 one 64b host channel 202 is shown as an example, whereby two DIMMs 204 and 206 share the same channel or bus 202 to the host 201. Each DIMM is populated with 4 memory ranks 205. Since ranks 205 and DIMMs 204, 206 compete for bandwidth on the host channel, the usable peak bandwidth lies at 25.6 GB/s for memory devices of the type DDR4-3200.

In a configuration according to an embodiment of the invention, 51.2 GB/s usable peak bandwidth may be achieved, because each DIMM 210 or 212 can use the bandwidth of 25.6 GB/s independently due to the intelligent buffering effect of the MDC 213 on each DIMM 210, 212 between the host 208 and the DRAM devices of a particular rank. The DIMMs 210 and 212 are "disaggregated", because they do not have to compete for bandwidth on the host channel 214 anymore.

In a further configuration a further doubling of usable peak bandwidth may be attained, if additionally the exemplary four ranks 205 may be combined into two local memory channels 211 (1:2 rank disaggregation). The MDC 213 may not only decouple the DIMMs 210 and 212 from the bus 214, which cannot use the bus at the same time without the buffering capability of the MDC 213, but also "disaggregates" ranks, because they do not have to wait for their respective chip-select signal and do therefore not have to compete for bandwidth on the host channel 214 anymore. As a result, 102.4 GB/s usable peak bandwidth (4x higher than standard configuration) may be attainable.

Further doubling of usable peak bandwidth may be attained if the exemplary four ranks 205 are re-organized into four local memory channels 211 (1:4 rank disaggregation). As a result, 204.8 GB/s usable peak bandwidth (8x higher than standard configuration) may be attainable.

The mode of operation (IMP computing enabled/disabled and/or rank disaggregation) can vary based on address ranges (e.g., based on the addressed memory rank). The mode of operation can be set statically or during run-time as will be elaborated upon in the following.

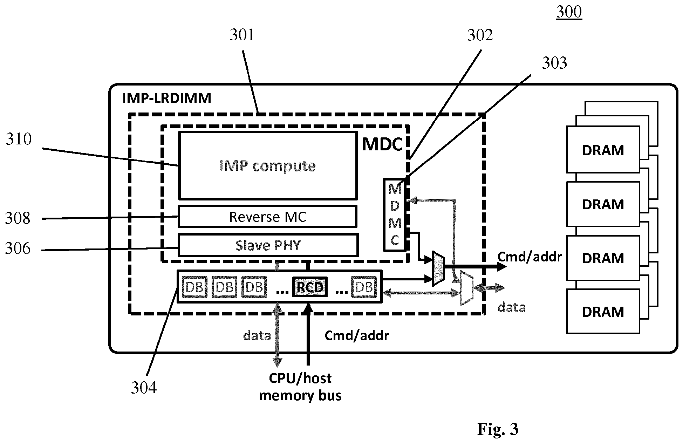

FIG. 3 shows a standard Load-Reduced Dual Inline Memory Module (LRDIMM) 300, which is augmented with IMP capability 310 in a central buffer chip or MDC 302 according to an embodiment of the present invention. The MDC 302 builds on the MDC 108 shown in Fig. 1. The resulting LRDIMM 300 is again referred to as IMP-LRDIMM. The block diagram shows two implementations of the MDC 302. In a first implementation traditional DB/RCD buffers (signal repeaters) 304 employed to connect with standard LRDIMMs are integrated with the MDC 302, while in a second implementation the DB and/or RCD buffers 304 are installed separately outside of the MDC 302.

In the following, the second implementation of an MDC 302 according to an embodiment of the invention is elaborated upon in more detail. The MDC 302 comprises an IMP unit 310 similar to the IMP unit 109, a Reverse Memory Controller (Reverse MC) 308, a Slave PHY 306 similar to the slave PHY 111, and a LMC 303 similar to the LMC 107, which is implemented on the MDC 302 as MDMC 303.

During initialization of a computing system, the memory controller 101, MC, of a host usually trains a PHY block in a memory device 113 or DB/RCD buffers 112 with test patterns, such that the memory device can sample command, address and data signals from the MC during operation. Training in the opposite direction is also necessary such that the MC can sample data sent by the memory device or buffer. The MC ensures that timing parameters of the memory device are met during normal operation and further maps physical addresses used by the core clusters of a host into multi-dimensional, memory-specific addresses. To this end, the MC maps the physical address from the host into a memory specific addressing scheme, which consists of sub-addresses like rank, bank/bank group, row and column addresses of the memory device. In case of a read access, the MC expects data returned by the memory device after defined timing periods, while the data signals will also be driven by the MC in case of a write access.

The slave PHY 306 and the Reverse MC 308 in the MDC 302 may ensure that the MC in the host can continue operating as if memory devices were directly under the control of the MC, whenever the IMP compute unit 310 is enabled. In this case, the MDMC 303 in the MDC 302 will actually be in charge of operating the memory devices.

The slave PHY 306 may be designed to be aware of the memory device timing assumed by the host to serve access requests from the host's MC (e.g., in order to drive data on the bus at the expected time after receiving a read command). The request for accessing main memory may then be handed over to a Reverse MC 308, which may be designed to reassemble a linear main memory address ("physical" addresses originally used by the host) from a plurality of protocol fields contained in the sub-addresses, which have been received from the MC within a host by the MDC 302, after the MC performed above discussed "mapping" of the linear address format. The reassembled memory address and the type of access (read or write) is then provided to a local memory controller or MDMC 303 on the MDC 302, such that the request can be rescheduled by the MDMC 303 in the MDC 302, if the reassembled linear memory address lies within a predetermined address range reserved for IMP computations.

The slave PHY 306 may further be designed to buffer read data (data to be returned as a result of a read request from the host), if the read timing on the bus to the host cannot be met, because it may take too long for the MDMC to process. In this case, the host MC polls for the availability of read data, and the slave PHY 306 identifies buffered entries based on read addresses transmitted by the host MC. Further methods may be applied to communicate the status of the buffer to the host, e.g. backlog of read data, by e.g. letting the host MC poll a memory-mapped status register.

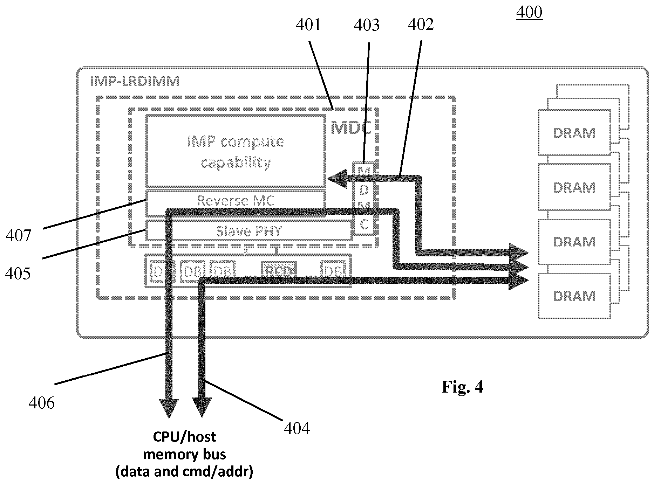

FIG. 4 shows three flow paths 402, 404 and 406 for memory accesses (i.e., data, command and address information) that can be distinguished, when a central buffer chip or MDC 401 according to an embodiment of the present invention is disposed on a standard LRDIMM 400 in order to enable IMP compute capability. The MDC 401 builds on the MDC 108 shown in Fig. 1. Similar to the MDC 108, the MDC 401 has an IMP unit, a slave PHY 405, an RMC 407, and an LMC 403.
a) If IMP is switched on as is shown on path 402, the IMP unit can directly access DRAM devices, since the LMC (e.g., MDMC) 403 is employed in order to schedule memory accesses to the memory devices.
b) If IMP is switched on, also memory accesses from the host 102 are serviced by the LMC 403 together with the memory accesses from case 402. This scenario of concurrent access to main memory by IMP and host is shown on path 406. As long as IMP computations are active, this case should be rare. For this path to work, the slave PHY block 405 and the reverse memory controller, RMC, 407 serve as a protocol end point for the protocol for the host. For instance in the case of DDR4, complete addresses are reassembled from RAS and CAS phases of the protocol, such that these accesses can be rescheduled by the LMC 403.
c) If IMP is switched off, memory accesses by the host are directly scheduled by the memory controller of the host CPU as shown on path 404, since the IMP-LRDIMM appears as original LRDIMM. Since IMP computing is switched off, the LMC 403 does not interfere with accesses scheduled by the host.

For JEDEC memory protocols like DDR4, memory accesses are subject to limited timing parameters. For case b), if read accesses from the host serviced by the MDMC 403 take too long for the protocol used by the host, the memory controller of the host (MC) changes to a different mode of operation in order to cope with the longer latency. For instance, the host MC could poll a memory-mapped register interface of the slave PHY 405 for available read data (polling mechanisms are known and not in the focus of this invention).

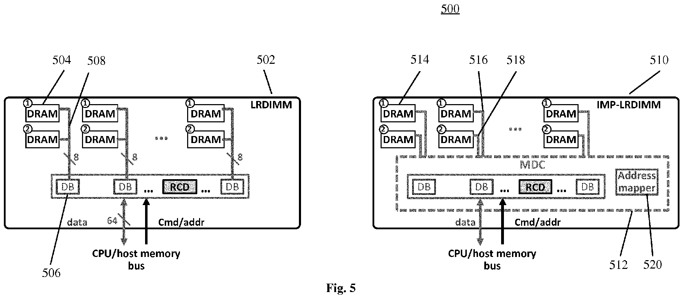

FIG. 5 shows an additional mode of operation 500 of an MDC according to the invention, if deployed on LRDIMMs, which has been referred to above as "rank disaggregation" on an IMP-LRDIMM. A standard LRDIMM 502 contains many DRAM devices 504 that are organized in memory ranks ① and ②. As an example, a traditional multi-rank organization of memory devices using x8 DRAM devices addressed by a 64b host channel is shown, whereby the memory devices 504 may be organized in 2 ranks ① and ② as in this example. Since only one rank can drive DB-signals 508 at a time, bandwidth is limited by the shared channel to DB units 506 on the DIMM (as well as the shared channel to the host). A memory rank, ① or ② in Fig. 5, is defined by a unique chip-select signal, whereas further command, address and data lines are shared 508 among ranks. As a result, only one rank at a time can service the bus to the host, since this is a shared bus.

For an IMP-LRDIMM 510 employing an MDC 512 according to the invention and shown on the right side of Fig. 5, a new multi-channel organization on an LRDIMM may be possible. The MDC 512 may take over control of the memory devices 514 via independent memory channels ① and ② with its MDMC, whereby some PCB-level wiring 516 and 518 overhead on the DIMM is required. As an example, DRAM devices 514 may now be organized in 2 channels ① and ② instead of two ranks. Due to this architecture twice the bandwidth is available for IMP computing on one LRDIMM. Host requests to access memory, which are still targeted at ranks, are mapped to local channel addresses with an address mapper 520.

As a result, the IMP compute blocks of the MDC 512 can take advantage of the increased bandwidth by having independent memory channels ① and ② instead of memory ranks. For accesses by the host, the bandwidth does not increase, since the bandwidth is limited by the host bus. An address mapper block 520 transfers host accesses targeted at rank addresses to local channel addresses. If there is a simple relationship between ranks seen by the host and channels implemented on the IMP-LRDIMM 510, a one-to-one mapping of ranks onto channels may be feasible, simplifying the mapping effort by the address mapper. Accesses to ranks may then simply be forwarded to corresponding channels. Memory access responses (like read data for accesses issued by the host) from different channels on the DIMM will not collide on the host bus, since the accesses to ranks are already serialized by the memory controller of the host 101 for the shared host bus.

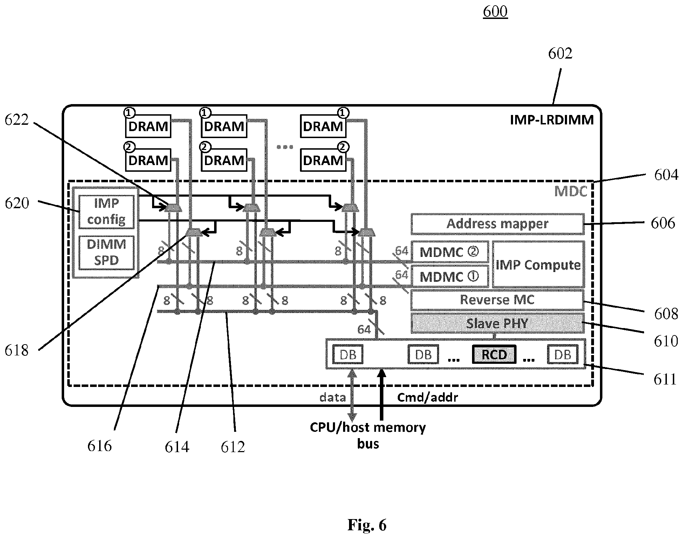

FIG. 6 shows a further way of rank disaggregation enabled by disposing an MDC 604 according to an embodiment of the invention on a standard LRDIMM (only data buses shown; same connectivity holds for command and addresses). The MDC 604 builds on the MDC 108 shown in Fig. 1. In this exemplary setup 600 with two channels ① and ②, whereby any amount of channels on the IMP-LRDIMM 602 is feasible, IMP computing may be enabled for selected address ranges. For all other main memory addresses IMP computing may be switched off. In this hybrid mode, both rescheduling of concurrent accesses to main memory requested by IMP and by a host as well as a strict containment of memory access to a defined memory range for IMP computing is performed.

If IMP computing is switched off for a particular address range, and if this address range is large enough to cover a complete channel on the IMP-LRDIMM 602, the channel can be put back onto direct control by the memory controller from the host, thus reducing latency for memory accesses coming from host. However, accesses from the host to channels, for which IMP computing is switched on (at least for part of the address range), will be scheduled by the local MDMC ①, MDMC ②, the slave PHY 610 and the Reverse MC 608 will be in operation in order to avoid memory access collisions as has been described in the discussion for Fig. 3.

The selection of address ranges may be executed by an IMP config unit 620, which controls a plurality of multiplexers 618 and 622. The multiplexer 618 or 622 may connect a particular segment of DRAM devices in channel ① or channel ② either with MDMC ① or MDMC ② of the MDC 604 via data/cmd lines 614 or 616 respectively or with the memory controller of the host 101 via a buffer unit 611. The multiplexing status may stay constant as long as the IMP configuration stays constant. The IMP configuration may be a preferred assignment of a memory range allowed for IMP computing ("containment"), while host computing is not limited by an address range.

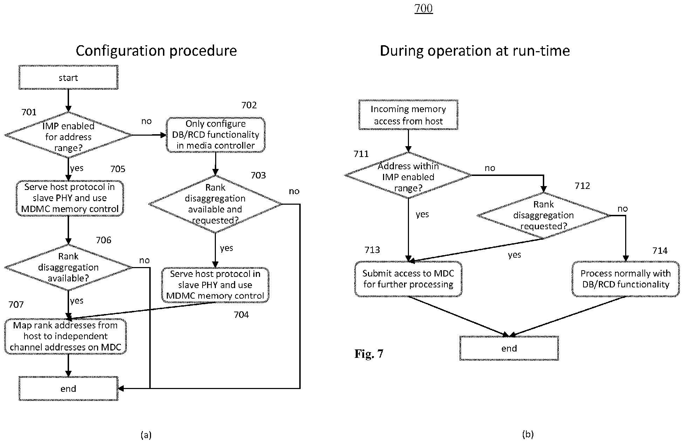

FIG. 7 shows the control flows 700 to an MDC for configuring of and during operation of an IMP-LRDIMM that supports hybrid configurations of IMP computing and rank disaggregation modes for different address ranges. A configuration is a combination of enabling or disabling the IMP compute capability and the rank disaggregation mode.

The left flow diagram of Fig. 7 (flow diagram (a)) shows how the physical address space of the IMP-LRDIMM can be subdivided into address ranges to define and support hybrid configurations:
- In case that IMP computing (for any address range) *is not envisaged* at step 701, only the DB/RCD functionality is configured in the MDC step 702. All requests to memory subsequently stem from the host and are routed to memory via the DB/RCD buffer unit. If further rank disaggregation on the IMP-LRDIMM is available and requested (step 703), at step 704 access requests to memory by the host may then be served by the slave PHY and reverse MC of the MDC such that the local memory controller of the MDC is used to access main memory. Since requests from the host to access main memory are typically associated with memory ranks, the MDC may further map those memory requests or memory addresses respectively to independent channel addresses (step 707).
- In case that IMP computing (for any address range) *is envisaged* at step 701, at step 705 access requests to memory by the host may be served by the slave PHY and reverse MC of the MDC such that the local memory controller of the MDC is used to access main memory either for memory requests from the IMP unit or from the host. If, at step 706 further rank disaggregation on the IMP-LRDIMM is available, the MDC may further map, at step 707 memory requests or memory addresses respectively from the host to independent channel addresses. Otherwise the process ends.

The right flow diagram of Fig. 7 (flow diagram (b)) shows the operation of an IMP-LRDIMM at run time, when a request for memory access arrives from a host and IMP computing is enabled:
- In case that the memory address, to which a host requests access to, is *within* a memory range enabled for IMP computing (step 711), the request is submitted for further processing by the MDC and its components at step 713.
- In case that the memory address, to which a host requests access to, is *outside of* a memory range enabled for IMP computing (step 711), it is checked at step 712 whether further rank disaggregation on the IMP-LRDIMM is available. If rank disaggregation is not available normal, processing with DB/RCD functionality is carried out (step 714). If rank disaggregation is available the request is submitted for further processing by the MDC and its components at step 713.

Referring to the flow diagrams (a) and (b) of Fig. 7, the processing steps at run time (flow diagram (b) are subject to the concrete configuration set up obtained by the procedure illustrated in the flow diagram (a) of Fig. 7. Specifically, in flow diagram (b) of Fig. 7, step 713 ("submit to MDC for further processing") the further processing steps is subject to the configuration obtained during the configuration procedure obtained at the end of the procedure illustrated in flow diagram (a) of Fig. 7. For example, the slave PHY may be enabled and address mapping may be applied.

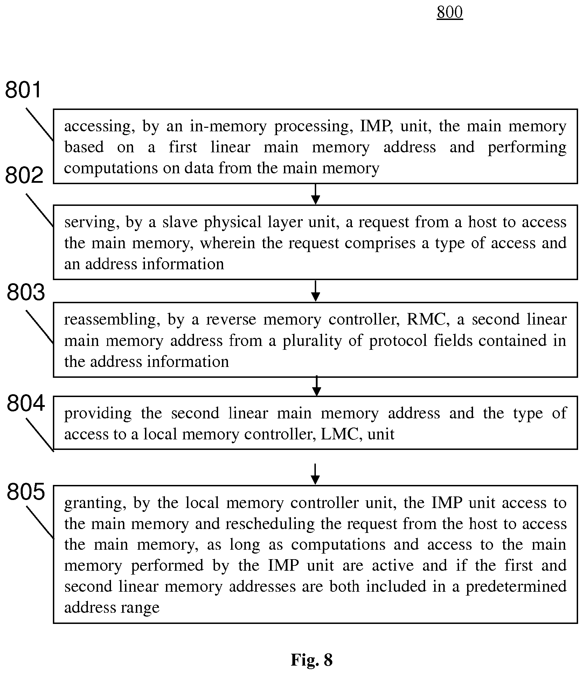

FIG. 8 shows a method 800 for enabling in-memory computing with a main memory in a computing device. The method includes a step 801 of accessing, by an in-memory processing, IMP, unit, the main memory based on a first linear main memory address and performing computations on data from the main memory. The method also includes a step 802 of serving, by a slave physical layer unit, a request from a host to access the main memory, wherein the request comprises a type of access and an address information. The method further comprises a step 803 of reassembling, by a reverse memory controller, RMC, a second linear main memory address from a plurality of protocol fields contained in the address information. The method further comprises a step 804 of providing the second linear main memory address and the type of access to a local memory controller, LMC, unit. Finally, the method comprises a step 805 of granting, by the local memory controller unit, the IMP unit access to the main memory and rescheduling the request from the host to access the main memory, as long as computations and access to the main memory performed by the IMP unit are active and if the first and second linear memory addresses are both included in a predetermined address range.

The invention has been described in conjunction with various embodiments as examples as well as implementations. However, other variations can be understood and effected by those persons skilled in the art and practicing the claimed invention, from the studies of the drawings, this disclosure and the independent claims. The shown examples mainly use JEDEC DDR4 as the memory device technology on DIMM. The working principles, however, are also amenable to, for instance, GDDR5 graphics RAM and byte-addressable non-volatile memory, such as 3D XPoint technology.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A media controller, MDC, (108) for enabling in-memory computing with a main memory, comprising:
an in-memory processor, IMP, (109) configured to access the main memory based on a first linear main memory address and to perform computations on data from the main memory;
a slave physical layer (111) configured to serve a request from a host (102) to access the main memory (105), wherein the request comprises a type of access and an address information;
a reverse memory controller, RMC, (110) configured to reassemble a second linear main memory address from a plurality of protocol fields contained in the address information, and to provide the second linear main memory address and the type of access to a local memory controller, LMC, (107); and
the LMC (107) configured to grant the IMP (109) access to the main memory and to reschedule the request from the host to access the main memory, as long as computations and access to the main memory performed by the IMP (109) are active and if the first and second linear memory addresses are both included in a predetermined address range.

2. The MDC (108) according to claim 1, wherein the request further comprises data and the RMC (110) is further configured to provide the data to the LMC (107), if the type of access is a write access.

3. The MDC (108) according to claim 1 or 2, further comprising:
a buffer (112) configured to decouple an electrical load on a memory channel (103) to the host from another electrical load of the main memory.

4. The MDC (108) according to claim 3, further comprising:
a switch (106) configured to disable or enable the IMP (109),
wherein the MDC (108) is configured to
route all requests from the host (102) to access the main memory without scheduling via the buffer (112), if the IMP (109) is disabled, and
schedule all requests from the host (102) to access the main memory by the LMC (107) and route the requests via the buffer (112), if the IMP (109) is enabled.

5. The MDC (108) according to claim 4, whereby the switch (106) is configured to be triggered at run-time or boot time of the computing device.

6. A memory module (300), comprising:
the MDC (302) according to one of the claims 1 to 4; and
at least a part of the main memory.

7. The memory module (300) according to claim 6, whereby
the at least a part of the main memory comprises a plurality of memory units disposed on a dual in-line memory module, DIMM, and organized in ranks, whereby each rank is defined by a unique chip-select signal and only one rank at a time has access to the memory channel to the host.

8. The memory module according to claim 6 or 7, whereby
each memory unit (516, 518) is addressed by and directly wired with the MDC (512) to replace its respective rank address with a rank-independent address of a local channel (①,②), whereby the local channel comprises all memory units associated with at least one rank, and all local channels are simultaneously accessible by the MDC.

9. The memory module according to claim 8, whereby
the MDC further comprises an address mapper (520) to map the request from the host of the computing device to access the main memory, which is targeted at the rank address of each memory unit, to the corresponding rank-independent local channel address.

10. The memory module according to claim 9, whereby
the address mapper (606) is configured to forward a rank address to the corresponding local channel (①,②), if the local channel comprises all memory units associated with exactly one rank.

11. The memory module according to claim 8 to 10, whereby the local memory controller of the MDC (604) is further configured to access only a range of memory units or only selected ranks.

12. The memory module according to claim 11, whereby a control over any of the local channels, which is covered by the range of memory units, is turned over to the host.

13. Method for enabling in-memory computing with a main, comprising the steps of:
accessing (801), by an in-memory processor, IMP, the main memory based on a first linear main memory address and performing computations on data from the main memory;
serving (802), by a slave physical layer, a request from a host to access the main memory, wherein the request comprises a type of access and an address information;
reassembling (803), by a reverse memory controller, RMC, a second linear main memory address from a plurality of protocol fields contained in the address information, and providing (804) the second linear main memory address and the type of access to a local memory controller, LMO,; and
granting (805), by the local memory controller, the IMP access to the main memory and rescheduling the request from the host to access the main memory, as long as computations and access to the main memory performed by the IMP are active and if the first and second linear memory addresses are both included in a predetermined address range.

14. Computer program product comprising a program code which when executed enables in-memory computing with a main memory according to one of the claims 1 to 5 or a memory module according to claims 6 to 12.

## Patentansprüche

1. Mediensteuerung, MDC, (108) zum Aktivieren von Berechnungen im Speicher mit einem Hauptspeicher, umfassend:
einen Prozessor im Speicher, IMP, (109), der dazu konfiguriert ist, basierend auf einer ersten linearen Hauptspeicheradresse auf den Hauptspeicher zuzugreifen und Berechnungen an Daten aus dem Hauptspeicher durchzuführen;
eine Slave-Bitübertragungsschicht (111), die dazu konfiguriert ist, eine Anforderung von einem Host (102) zum Zugriff auf den Hauptspeicher (105) zu bedienen, wobei die Anforderung eine Zugriffsart und Adressinformationen umfasst;
eine umgekehrte Speichersteuerung, RMC, (110), die dazu konfiguriert ist, aus einer Vielzahl von in den Adressinformationen enthaltenen Protokollfeldern eine zweite lineare Hauptspeicheradresse wiederherzustellen und die zweite lineare Hauptspeicheradresse und die Zugriffsart einer lokalen Speichersteuerung, LMC, (107) bereitzustellen; und
wobei die LMC (107) dazu konfiguriert ist, dem IMP (109) Zugriff auf den Hauptspeicher zu gewähren und die Anforderung von dem Host zum Zugriff auf den Hauptspeicher neu zu planen, solange durch den IMP (109) durchgeführte Berechnungen und Zugriffe auf den Hauptspeicher aktiv sind und wenn die erste und die zweite lineare Speicheradresse beide in einem vorbestimmten Adressbereich beinhaltet sind.

2. MDC (108) nach Anspruch 1, wobei die Anforderung ferner Daten umfasst und die RMC (110) ferner dazu konfiguriert ist, die Daten der LMC (107) bereitzustellen, wenn die Zugriffsart ein Schreibzugriff ist.

3. MDC (108) nach Anspruch 1 oder 2, ferner umfassend:
einen Puffer (112), der dazu konfiguriert ist, eine elektrische Last auf einem Speicherkanal (103) zu dem Host von einer anderen elektrischen Last des Hauptspeichers zu entkoppeln.

4. MDC (108) nach Anspruch 3, ferner umfassend:
einen Schalter (106), der dazu konfiguriert ist, den IMP (109) zu deaktivieren oder zu aktivieren,
wobei die MDC (108) zu Folgendem konfiguriert ist:
Leiten aller Anforderungen von dem Host (102) zum Zugriff auf den Hauptspeicher ohne Planung über den Puffer (112), wenn der IMP (109) deaktiviert ist, und
Planen aller Anforderungen von dem Host (102) zum Zugriff auf den Hauptspeicher durch die LMC (107) und Leiten der Anforderungen über den Puffer (112), wenn der IMP (109) aktiviert ist.

5. MDC (108) nach Anspruch 4, wobei der Schalter (106) dazu konfiguriert ist, zur Laufzeit oder zur Startzeit der Rechenvorrichtung ausgelöst zu werden.

6. Speichermodul (300), umfassend:
die MDC (302) nach einem der Ansprüche 1 bis 4; und
mindestens einen Teil des Hauptspeichers.

7. Speichermodul (300) nach Anspruch 6, wobei
der mindestens eine Teil des Hauptspeichers eine Vielzahl von Speichereinheiten umfasst, die auf einem Dual-In-Line-Speichermodul, DIMM, angeordnet und in Ranks organisiert sind, wobei jeder Rank durch ein einzigartiges Chip-Auswahlsignal definiert ist und immer nur ein Rank über Zugriff auf den Speicherkanal zu dem Host verfügt.

8. Speichermodul nach Anspruch 6 oder 7, wobei
jede Speichereinheit (516, 518) durch die MDC (512) adressiert wird und direkt mit dieser verdrahtet ist, um ihre jeweilige Rank-Adresse durch eine Rank-unabhängige Adresse eines lokalen Kanals (①,②) zu ersetzen, wobei der lokale Kanal alle Speichereinheiten umfasst, die mit mindestens einem Rank assoziiert sind, und durch die MDC auf alle lokalen Kanäle gleichzeitig zugegriffen werden kann.

9. Speichermodul nach Anspruch 8, wobei
die MDC ferner eine Adresszuordnungseinrichtung (520) zum Zuordnen der Anforderung von dem Host der Rechenvorrichtung zum Zugriff auf den Hauptspeicher, die auf die Rank-Adresse jeder Speichereinheit gerichtet ist, zu der entsprechenden Rankunabhängigen lokalen Kanaladresse umfasst.

10. Speichermodul nach Anspruch 9, wobei
die Adresszuordnungseinrichtung (606) dazu konfiguriert ist, eine Rank-Adresse an den entsprechenden lokalen Kanal (①,②) weiterzuleiten, wenn der lokale Kanal alle Speichereinheiten umfasst, die mit genau einem Rank assoziiert sind.

11. Speichermodul nach Anspruch 8 bis 10, wobei die lokale Speichersteuerung der MDC (604) ferner dazu konfiguriert ist, nur auf einen Bereich von Speichereinheiten oder nur auf ausgewählte Ranks zuzugreifen.

12. Speichermodul nach Anspruch 11, wobei eine Steuerung über einen beliebigen der lokalen Kanäle, der durch den Bereich von Speichereinheiten abgedeckt wird, an den Host übergeben wird.

13. Verfahren zum Aktivieren von Berechnungen im Speicher mit einem Hauptspeicher, umfassend die folgenden Schritte:
Zugreifen (801), durch einen Prozessor im Speicher, IMP, auf den Hauptspeicher basierend auf einer ersten linearen Hauptspeicheradresse und Durchführen von Berechnungen an Daten aus dem Hauptspeicher;
Bedienen (802), durch eine Slave-Bitübertragungsschicht, einer Anforderung von einem Host zum Zugriff auf den Hauptspeicher, wobei die Anforderung eine Zugriffsart und Adressinformationen umfasst;
Wiederherstellen (803), durch eine umgekehrte Speichersteuerung, RMC, einer zweiten linearen Hauptspeicheradresse aus einer Vielzahl von in den Adressinformationen enthaltenen Protokollfeldern und Bereitstellen (804) der zweiten linearen Hauptspeicheradresse und der Zugriffsart an eine lokale Speichersteuerung, LMC**;** und
Gewähren (805), durch die lokale Speichersteuerung, von Zugriff auf den Hauptspeicher für den IMP und Neuplanen der Anforderung von dem Host zum Zugriff auf den Hauptspeicher, solange durch den IMP durchgeführte Berechnungen und Zugriffe auf den Hauptspeicher aktiv sind und wenn die erste und die zweite lineare Speicheradresse beide in einem vorbestimmten Adressbereich beinhaltet sind**.**

14. Computerprogrammprodukt, umfassend einen Programmcode, der bei Ausführung Berechnungen im Speicher mit einem Hauptspeicher nach einem der Ansprüche 1 bis 5 oder einem Speichermodul nach Anspruch 6 bis 12 ermöglicht.

## Revendications

1. Contrôleur de média, MDC, (108) pour permettre un calcul en mémoire avec une mémoire principale, comprenant :
un processeur en mémoire, IMP, (109) configuré pour accéder à la mémoire principale sur la base d'une première adresse de mémoire principale linéaire et pour exécuter des calculs sur des données de la mémoire principale ;
une couche physique esclave (111) configurée pour répondre à une demande provenant d'un hôte (102) pour accéder à la mémoire principale (105), dans lequel la demande comprend un type d'accès et des informations d'adresse ;
un contrôleur de mémoire inverse, RMC, (110) configuré pour réassembler une seconde adresse de mémoire principale linéaire à partir d'une pluralité de champs de protocole contenus dans les informations d'adresse, et pour fournir la seconde adresse de mémoire principale linéaire et le type d'accès à un contrôleur de mémoire local, LMC, (107) ; et
le LMC (107) étant configuré pour accorder à l'IMP (109) l'accès à la mémoire principale et pour reprogrammer la demande de l'hôte pour accéder à la mémoire principale, tant que les calculs et
l'accès à la mémoire principale exécutés par l'IMP (109) sont actifs et si les première et seconde adresses de mémoire linéaire sont toutes deux incluses dans une plage d'adresses prédéterminée.

2. MDC (108) selon la revendication 1, dans lequel la demande comprend également des données et le RMC (110) est également configuré pour fournir les données au LMC (107), si le type d'accès est un accès en écriture.

3. MDC (108) selon la revendication 1 ou 2, comprenant également :
un tampon (112) configuré pour découpler une charge électrique sur un canal de mémoire (103) vers l'hôte d'une autre charge électrique de la mémoire principale.

4. MDC (108) selon la revendication 3, comprenant également :
un commutateur (106) configuré pour désactiver ou activer l'IMP (109),
dans lequel le MDC (108) est configuré pour
acheminer toutes les demandes de l'hôte (102) pour accéder à la mémoire principale sans programmation via le tampon (112), si l'IMP (109) est désactivé, et
programmer toutes les demandes de l'hôte (102) pour accéder à la mémoire principale par le LMC (107) et acheminer les demandes via le tampon (112), si l'IMP (109) est activé.

5. MDC (108) selon la revendication 4, moyennant quoi le commutateur (106) est configuré pour être déclenché au moment de l'exécution ou du démarrage du dispositif informatique.

6. Module de mémoire (300), comprenant :
le MDC (302) selon l'une des revendications 1 à 4 ; et
au moins une partie de la mémoire principale.

7. Module de mémoire (300) selon la revendication 6, moyennant quoi
l'au moins une partie de la mémoire principale comprend une pluralité d'unités de mémoire disposées sur un module de mémoire double en ligne, DIMM, et organisées en rangs, moyennant quoi chaque rang est défini par un signal de sélection de puce unique et un seul rang à la fois a accès au canal de mémoire vers l'hôte.

8. Module de mémoire selon la revendication 6 ou 7, moyennant quoi
chaque unité de mémoire (516, 518) est adressée par et directement câblée avec le MDC (512) pour remplacer son adresse de rang respective par une adresse indépendante du rang d'un canal local (①,②), moyennant quoi le canal local comprend toutes les unités de mémoire associées à au moins un rang, et tous les canaux locaux sont simultanément accessibles par le MDC.

9. Module de mémoire selon la revendication 8, moyennant quoi le MDC comprend également un mappeur d'adresses (520) pour mapper la demande de l'hôte du dispositif informatique pour accéder à la mémoire principale, qui cible l'adresse de rang de chaque unité de mémoire, à l'adresse de canal local indépendante du rang correspondante.

10. Module de mémoire selon la revendication 9, moyennant quoi le mappeur d'adresses (606) est configuré pour transmettre une adresse de rang au canal local correspondant (①,②), si le canal local comprend toutes les unités de mémoire associées à exactement un rang.

11. Module de mémoire selon la revendication 8 à 10, moyennant quoi le contrôleur de mémoire local du MDC (604) est également configuré pour accéder uniquement à une plage d'unités de mémoire ou uniquement à des rangs sélectionnés.

12. Module de mémoire selon la revendication 11, moyennant quoi un contrôle sur l'un quelconque des canaux locaux, qui est couvert par la plage d'unités de mémoire, est transféré à l'hôte.

13. Procédé pour permettre un calcul en mémoire avec une mémoire principale, comprenant les étapes suivantes :
l'accès (801), par un processeur en mémoire, IMP, à la mémoire principale sur la base d'une première adresse de mémoire principale linéaire et l'exécution de calculs sur des données de la mémoire principale ;
la desserte (802), par une couche physique esclave, d'une demande d'un hôte pour accéder à la mémoire principale, dans lequel la demande comprend un type d'accès et une information d'adresse ;
le réassemblage (803), par un contrôleur de mémoire inverse, RMC, d'une seconde adresse de mémoire principale linéaire à partir d'une pluralité de champs de protocole contenus dans les informations d'adresse, et la fourniture (804) de la seconde adresse de mémoire principale linéaire et du type d'accès à un contrôleur de mémoire local, LMC ; et
l'octroi (805), par le contrôleur de mémoire local, à l'IMP de l'accès à la mémoire principale et la reprogrammation de la demande de l'hôte pour accéder à la mémoire principale, tant que les calculs et l'accès à la mémoire principale exécutés par l'IMP sont actifs et si les première et seconde adresses de mémoire linéaire sont toutes deux incluses dans une plage d'adresses prédéterminée.

14. Produit de programme informatique comprenant un code programme qui, lorsqu'il est exécuté, permet un calcul en mémoire avec une mémoire principale selon l'une des revendications 1 à 5 ou un module de mémoire selon les revendications 6 à 12.
